# EUROPEAN PATENT SPECIFICATION

(11) **EP 0 787 620 B1**
(45) Date of publication and mention of the grant of the patent: **18.12.2002**
(21) Application number: 96112835.2
(22) Date of filing: 08.08.1996
(51) Int. Cl.: B60L 7/14

(54) **Electric vehicle controller**
Steuereinrichtung für ein Elekrofahrzeug
Appareil de commande pour une véhicule électrique

(30) Priority: 01.02.1996 JP 1675396
(43) Date of publication of application: 06.08.1997
(73) Proprietor: MITSUBISHI DENKI KABUSHIKI KAISHA, Tokyo 100 (JP)
(72) Inventor: Matsumoto, Takeo, Chiyoda-ku, Tokyo 100 (JP); Asano, Yumiko, Chiyoda-ku, Tokyo 100 (JP); Obi, Hideo, Chiyoda-ku, Tokyo 100 (JP); Nakamoto, Noriaki, Chiyoda-ku, Tokyo 100 (JP)
(74) Representative: Sajda, Wolf E., Dipl.-Phys.

(56) References cited:
- PATENT ABSTRACTS OF JAPAN vol. 011, no. 269 (M-621), 2 September 1987 & JP 62 071404 A (TOSHIBA CORP), 2 April 1987,
- PATENT ABSTRACTS OF JAPAN vol. 014, no. 172 (M-0958), 4 April 1990 & JP 02 026203 A (MITSUBISHI ELECTRIC CORP), 29 January 1990,
- PATENT ABSTRACTS OF JAPAN vol. 017, no. 503 (M-1478), 10 September 1993 & JP 05 130707 A (HITACHI LTD), 25 May 1993,

## Description

### Field of the Invention

The present invention relates to an electric vehicle controller which is used in the control of a motor for driving an electric railway vehicle.

### Description of Related Art

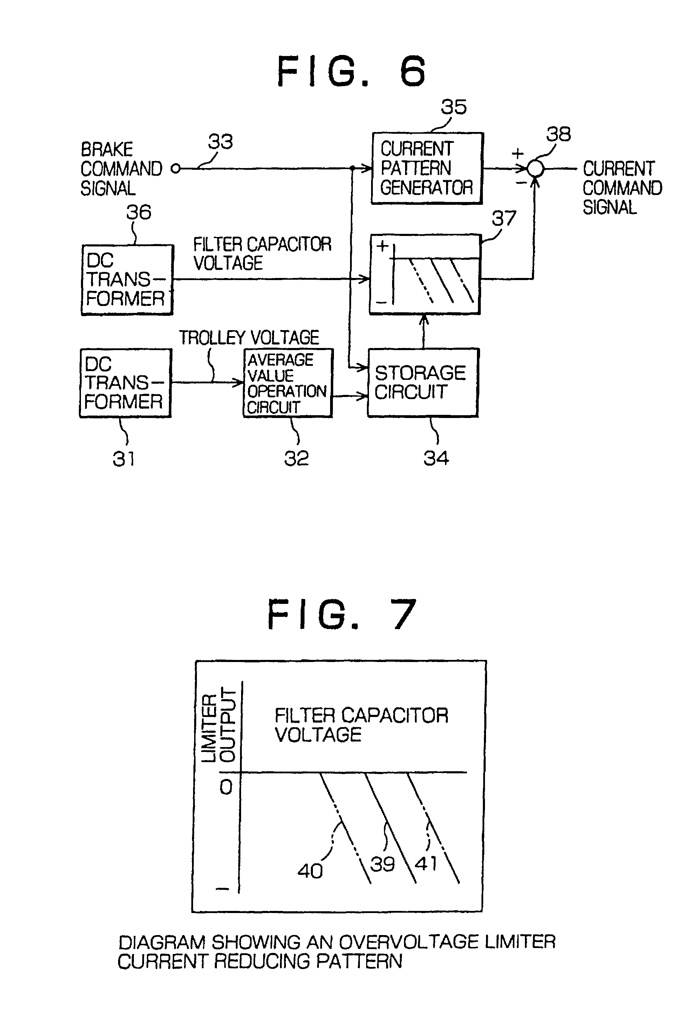

Fig. 6 is a block diagram showing a conventional electric vehicle controller disclosed in Japanese Patent Laid-Open No. 2-26203.

This electric vehicle controller includes a DC transformer 31 connected to a pantograph (not shown) for detecting a DC trolley voltage, an average value operation circuit 32 connected to this DC transformer 31 for obtaining an average value of the detected trolley voltages, and a storage circuit 34 connected to a brake command signal input terminal 33 for receiving a brake command signal and also connected to the average value operation circuit 32. The storage circuit 34 stores the average value of the trolley voltages at the time that a regenerative brake command has been input by the brake command signal. The electric vehicle controller further includes a current pattern generator 35 connected to the brake command input terminal 33 for generating a current pattern, based on the brake command signal, and a DC transformer 36 for filter capacitor voltage detection which is connected to a filter capacitor (not shown) for detecting the voltage of the filter capacitor. The electric vehicle controller further includes an overvoltage limiter 37, which is connected to the DC transformer 36 for filter capacitor voltage detection and also connected to the storage circuit 34. The overvoltage limiter 37 will output a current reducing voltage (negative value) if the filter capacitor voltage exceeds a predetermined value. The electric vehicle controller also includes an adder 38, which is connected to the overvoltage limiter 37 and the current pattern generator 35. The adder 38 serves as a current command circuit which performs addition of the outputs of the overvoltage limiter 37 and the current pattern generator 35.

Fig. 7 shows the current reducing pattern of the overvoltage limiter 37.

The operation of the conventional electric vehicle controller will hereinafter be described with Figs. 6 and 7.

Based on the brake command signal which was input in the brake command signal input terminal 33, a current pattern is generated by the current pattern generator 35. If the output of the filter capacitor voltage detection DC transformer 36 exceeds a predetermined value, then the overvoltage limiter 37 will operate, and the adder 38 serving as a current command circuit will add the current pattern output and the current reducing output of the overvoltage limiter 37 and will output a current command signal.

On the other hand, the trolley voltage is detected by the trolley voltage detection DC transformer 31 during coasting, and an average value of the detected trolley voltages is obtained by the average value operation circuit 32. At the time the brake command signal is input to the brake command signal input terminal 33, the storage circuit 34 stores the average value of the trolley voltages transmitted from the average operation circuit 32. Then, based on the trolley voltage averaged value input to the storage circuit 34, the current reducing patterns shown in Fig. 7 will be selected as follows.

First, in the case where the average value of the trolley voltages is high, a current reducing pattern 40, where the start point of the current reduction is lower than normal pattern 39, is selected, and the current reduction is performed by operating the overvoltage limiter 37 at a lower value of the filter capacitor voltage. On the other hand, in the case where the average value of the trolley voltages is low, a current reducing pattern 41, where the start point of the current reduction is higher than the normal pattern 39, is selected, and the current reduction is performed by operating the overvoltage limiter 37 at a higher value of the filter capacitor voltage.

Thus, in the conventional electric vehicle controller, when the trolley voltage is high, it is assumed that there is no railway vehicle which becomes a load on the power supply side and that the trolley impedance is high, and the overvoltage limiter 37 is operated in its early stages. In addition, until the filter capacitor voltage is sufficiently reduced, the current reduction is performed so that the frequency that an overvoltage is applied to the filter capacitor is reduced, and consequently, the frequency that an overvoltage protecting device for the filter capacitor is operated is reduced. On the other hand, in the case where the trolley voltage is low, the number of the operations of the overvoltage limiter 37 itself is reduced so that regenerative control can be effectively performed.

However, the conventional electric vehicle controller has the following problems, when it is constructed as described above.

That is, although the rated value of the trolley voltage has been determined, an actual trolley voltage fluctuates from the rated value, due to a change in the output voltage of a transforming station, the positional relationship between the transforming station and the trolley wire, and the characteristic of the transforming station such as the existence of a load vehicle.

Therefore, in a case where the trolley voltage is originally higher than the rated voltage, there is the problem that regenerative power is unnecessarily reduced even when a railway vehicle, which becomes a load, exists.

In addition, in a case where the trolley voltage is originally lower than the rated voltage, there is the problem that the operation of the overvoltage limiter is delayed, the regenerative power becomes excessive, and a DC voltage rises, when there is no railway vehicle which becomes a load.

### BRIEF SUMMARY OF THE INVENTION

This invention has been made in order to overcome the aforementioned problems. Accordingly, the object of the invention is to provide an electric vehicle controller which regulates a regenerative braking power by grasping the characteristic of a transforming station such as the existence of a load vehicle and thereby effectively controls regenerative braking.

In accordance with an aspect of the present invention, there is provided an electric vehicle controller according to claim 1.

With this arrangement, the regenerative braking power can be regulated while grasping the characteristic of a transforming station such as the existence of a load vehicle, and consequently, the regenerative braking can be effectively controlled.

In a preferred form of the invention, said trolley voltage detecting means is constituted by said filter capacitor voltage detector which detects the voltage of said filter capacitor when the control rectifying devices of said power converter circuit are not operated.

With this arrangement, the filter capacitor voltage detector can be used as the trolley voltage detecting means.

In another preferred form of the invention, said filter capacitor voltage detector serving as said trolley voltage detecting means detects the voltage of said filter capacitor between the time that said command is input from the operation table and the time that the control rectifying devices of said power converter circuit are operated.

In still another preferred form of the invention, the regulation of said regenerative power is performed by increasing or decreasing the threshold value of the voltage of said filter capacitor.

In a further preferred form of the invention, the regulation of said regenerative power is performed by regulating a rate of change of regenerative braking activation.

With these arrangements, the regenerative braking power can be regulated while grasping the characteristic of a transforming station such as the existence of a load vehicle, and consequently, the regenerative braking can be effectively controlled.

### BRIEF DESCRIPTION OF THE DRAWINGS

The above and other objects and advantages will become apparent from the following detailed description when read in conjunction with the accompanying drawings wherein:
Fig. 1 is a circuit diagram showing an embodiment of an electric vehicle controller of the present invention;
Fig. 2 is a block diagram showing an embodiment of the regenerative power regulating device of the present invention;
Fig. 3 is a diagram showing an example of the regenerative power reducing pattern of the present invention;
Fig. 4 is a block diagram showing another embodiment of the regenerative power regulating device of the present invention;
Fig. 5 is a diagram showing an example of the time constant of the regenerative braking activation of the present invention;
Fig. 6 is a circuit diagram showing a conventional electric vehicle controller for three-phase induction motor control; and
Fig. 7 is an explanatory diagram showing the operation of the electric vehicle controller for three-phase induction motor control.

### DETAILED DESCRIPTION OF THE PREFERRED EMBODIMENTS

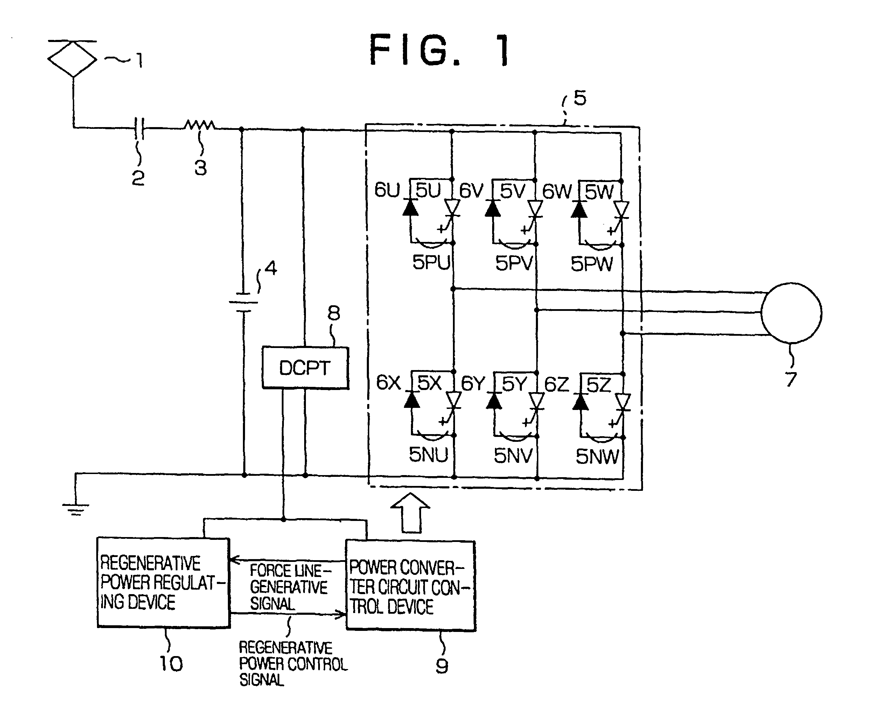

Referring to Fig. 1, there is shown a preferred embodiment of an electric vehicle controller in accordance with the present invention. The electric vehicle controller is equipped with a pantograph 1 for obtaining electric power from the trolley wire of a railway line, a DC breaker 2 for electrically disconnecting, an electric vehicle connected to the pantograph 1 and the trolley wire, a filter reactor (hereinafter referred as a FL) 3 connected to this DC breaker 2 for smoothing a DC current ripple obtained from the trolley wire, and a filter capacitor (hereinafter referred as a FC) 4 connected to this FL 3 for regulating a DC voltage.

The electric vehicle controller is further equipped with an inverter circuit 5 connected in series with the FL 3 and in parallel with a DC voltage detector to be described later. This inverter circuit 5 constitutes a power converter circuit constituting a three-phase inverter circuit, in which a positive electrode side element group of 5PU, 5PV, and 5PW of U, V, and W phases and a negative electrode side element group of 5NU, 5NV, and 5NW of U, V, and W phases are connected in series at intervals of each phase and in which all of the opposite ends of each of the serially connected U, V, and W phases are connected in parallel with the FC4.

That is, the inverter circuit 5 is equipped with control rectifying devices 5U, 5V, and 5W such as gate turn-off thyristors (hereinafter referred to as GTOs) provided on the positive electrode sides of the U, V, and W phases, control rectifying devices 5X, 5Y, and 5Z such as GTOs provided on the positive electrode sides of the U, V, and W phases, and diodes 6U, 6V, and 6W and diodes 6X, 6Y, and 6Z respectively connected in inverse-parallel with the control rectifying devices of each phase. The control rectifying device and the diode in inverse-parallel connection constitute each of the aforementioned positive electrode side element group of 5PU, 5PV, and 5PW and negative electrode side element group of 5NU, 5NV, and 5NW.

On the output terminals of the inverter circuit 5, that is, the intermediate connection points between the positive electrode side element group of 5PU, 5PV, and 5PW of U, V, and W phases and the negative electrode side element group of 5NU, 5NV, and 5NW of U, V, and W phases, there is connected a three-phase induction motor 7 which is a main motor for driving a railway vehicle at intervals of each phase.

A DC voltage detector 8 (hereinafter referred to as a DCPT), connected in parallel with the inverter circuit 5, is a filter capacitor voltage detector provided for measuring a FC potential. This filter capacitor voltage detector, in this embodiment, doubles as trolley voltage detecting means claimed in the appended claims, and detects the voltage of the filter capacitor when the control rectifying element of the power converter circuit is not operated, thereby constituting the trolley voltage detecting means. Note that the trolley voltage detecting means of this invention may be constituted by a structure where the trolley voltage can be detected directly or indirectly and therefore the trolley voltage detecting means does not need to be limited to such a filter capacitor voltage detector.

The DCPT 8 is equipped with a power converter circuit control device 9 and a regenerative power regulating element 10. In response to the command from the operation table or the FC voltage input from the DCPT 8, the power converter circuit control device 9 commands the operative state of the control rectifying element so that the tractive force or braking force generated by the main motor is controlled to a target value. In response to the force line-regeneration signal from this power converter circuit control device 9, the regenerative power regulating device 10 monitors the FC voltage when the control rectifying devices of the power converter circuit are not operated, then sets a threshold value based on the difference between the monitored value and the DC rated trolley voltage, determines the regulation of regenerative power by comparing the FC voltage during actual regeneration with the threshold value, and outputs a regenerative power control signal to the power converter circuit control device. The power converter circuit control device 9 receives the regenerative power control signal, and actually controls the switching of the control rectifying devices 5U, 5V, and 5W and control rectifying devices 5X, 5Y, and 5Z so that the regenerative braking power can be increased and decreased.

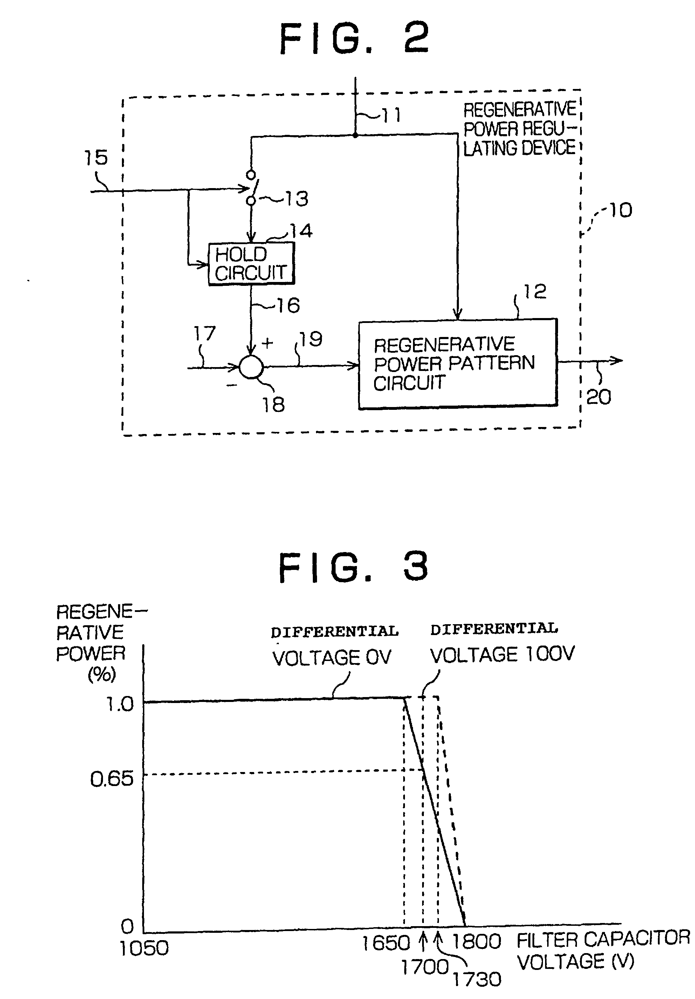

Fig. 2 shows an embodiment of the generative power regulating device 10. This regenerative power regulating device 10 is equipped with a regenerative power pattern circuit 12 for receiving the output signal 11 of the DCPT8 shown in Fig. 1, a signal changing switch 13 for changing the output signal 11 of the DCPT8, based on a signal from the power converter circuit control device 9, and a hold circuit 14 connected to this switch 13 and the power converter circuit control device 9 for holding the signal sent from the power converter circuit control device 9.

A signal 15 from the power converter circuit control device 9 is a signal representative of "during coasting." With this signal 15, the switch 13 is turned off, except for the "during coasting" of the electric vehicle, and at the same time, the output 16 of the hold circuit 14 is held to a held value before that. That is, during coasting, the FC voltage appears on the output 16 of the hold circuit 14. The output terminal of the hold circuit 14 is connected to a subtracter 18, in which the DC rated trolley voltage 17 is subtracted from the output of the hold circuit 14. The output terminal of this subtracter 18 is connected to the regenerative power pattern circuit 12, and the value, obtained by subtracting the rated trolley voltage 17 from the output value 16 of the hold circuit 14, becomes an input (differential voltage) 19 to the regenerative power pattern circuit 12.

Now, the operation of the regenerative power pattern circuit 12 will be described with Fig. 3. In Fig. 3, the axis of abscissa represents the FC voltage and the axis of ordinate the regenerative power limiting value. Initially, when the differential voltage 19 of Fig. 2 is a zero voltage, the circuit 12 operates in the same way as before. According to this regenerative power pattern, the regenerative power starts to be limited when the FC voltage is 1650 V, and the regenerative power becomes zero when the FC voltage is 1800 V. However, in the case of the differential voltage 19 being 100 V, that is, in the case of the DC rated trolley voltage being 1500 V, when the FC voltage is detected to be 1600 V, it is assumed that a transforming station which supplies electric power to the DC trolley wire outputs a voltage higher than the DC rated trolley voltage. The regenerative power is regulated so as not to be limited at a FC voltage of 1650 V. And, in the characteristic of Fig. 3, the regenerative power starts to be limited when the FC voltage is more than 1730 V, and the regenerative power becomes zero when the FC voltage is 1800 V.

According to this, when the FC voltage is 1700 V, the conventional operation has been limited to the regenerative power of 65%, the regenerative braking has not been operated effectively, and the quantity of the regenerative power has been reduced, however in this embodiment it becomes possible to perform a regenerative power operation of 100%.

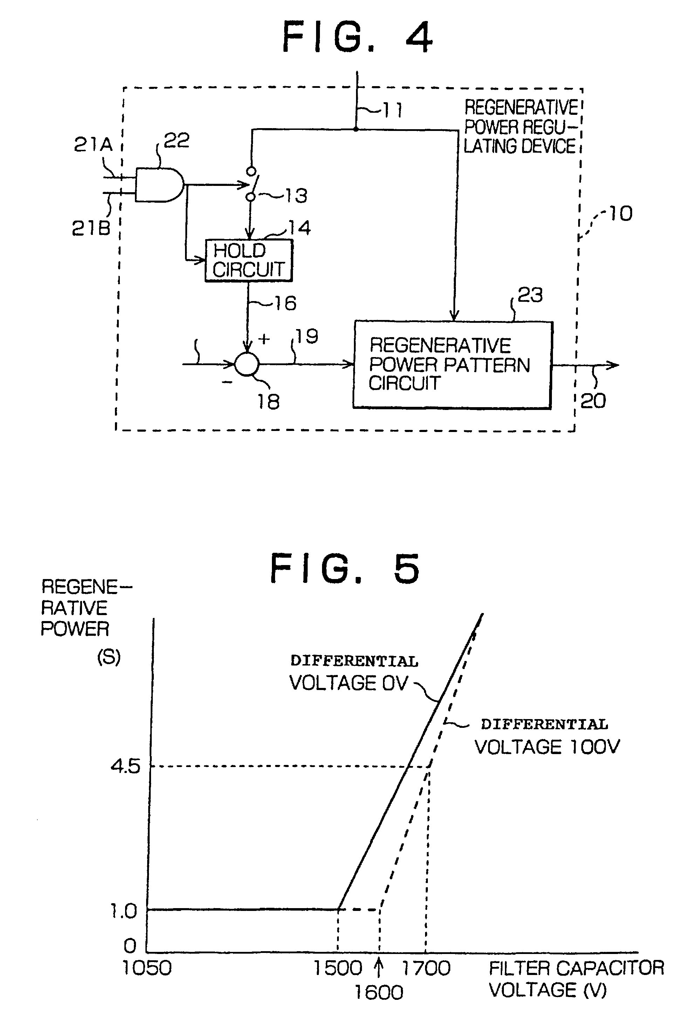

Fig. 4 shows another embodiment of the regenerative power control device 10. In Fig. 4, reference numerals 11, 13, 14, and 16 to 20 are identical with or correspond to Fig. 2 and therefore a description is omitted. Reference numerals 21A and 21B denote a brake command (regenerative braking command from an operation table, etc.) and a start gate signal (start gate signal of inverter 5), respectively, which are output from the power converter circuit control device 9 of Fig. 1. Reference numeral 22 denotes an AND circuit, which performs the AND operation of the signals 21A and 21B and then outputs an on-off signal of the switch 13. On the output signal 16 of the hold circuit 14, the FC voltage appears between the time that the control command is input from the operation table and the time that the control rectifying devices of the power converter circuit are operated.

The operation of the regenerative power pattern circuit 23 will be described with Fig. 5. In Fig. 5, the axis of abscissa represents the FC voltage and the axis of ordinate the time constant of the regenerative braking activation. In the case of the conventional device, the time constant of the regenerative braking activation is constant independently of the FC voltage. However, in this embodiment of the present invention, when the differential voltage of Fig. 4 is 100 V, it is supposed that the DC rated trolley voltage has been highly output. When the FC voltage is more than 1600 V the time constant is increased, and the FC voltage is 1700 V the time constant is increased by 4.5 times. With this, in the case of differential voltage 100 V and FC voltage 1700 V, while it has been seen in the conventional device that the DC rated trolley voltage abnormally rises because the time constant of the regenerative braking activation is small, in this embodiment of the present invention the time constant of the regenerative braking activation is increased by 4.5 times and it becomes possible to prevent an abnormal rise in the DC rated trolley voltage.

Although, in the aforementioned embodiments, the power converter circuit has been described as an inverter circuit 5, the same advantages as the aforementioned embodiments will be obtainable even for a chopper circuit.

Also, while the inverter circuit 5 which is a power converter circuit has been described as a 2-level inverter circuit, the same advantages as the aforementioned embodiments will be obtainable even for a 3-level inverter circuit.

In addition, while the control rectifying devices of the inverter circuits 5U, 5V, 5W, 5X, 5Y, and 5Z have been described by using the GTOs, the same advantages as the aforementioned embodiments would be obtainable even if various semiconductor devices of arc extinguish types, such as transistors, field effect transistors, or insulated gate bipolar mode transistors, were used.

Furthermore, although the diodes 6U, 6V, 6W, 6X, 6Y, and 6Z, respectively connected in inverse-parallel with the control rectifying devices 5U, 5V, 5W, 5X, 5Y, and 5Z of the inverter circuit 5, have been described as separate elements, the same advantages of the aforementioned embodiments would be obtainable even if various semiconductor devices of arc extinguish types, such as a combination of a control rectifying element and a diode connected on the same element in inverse-parallel, were used.

Therefore, the present examples and embodiments are to be considered as illustrative and not restrictive and the invention is not to be limited to the details given herein , but by the appended claim's.

## Claims

1. An electric vehicle controller comprising:
- a filter capacitor (4) connected to a DC trolley wire;
- a power converter circuit (5) connected through the filter capacitor (4) to the DC trolley wire and constituted by control rectifying devices which supply power to a main motor (7) and on the other hand, which regenerate electric energy converted from kinetic energy in the DC trolley wire when the braking of the main motor (7) is operated;
- a filter capacitor voltage detector (8) for detecting a voltage of the filter capacitor (4);
- a power converter circuit control device (9) which controls tractive force or braking force generated by the main motor (7) in response to a command from an operation table or an input from the filter capacitor voltage detector (8) and which also, during regeneration, controls regenerative braking power so that the power is reduced if the voltage of the filter capacitor (4) is more than a threshold value;
- trolley voltage detecting means for detecting a voltage of the trolley wire; and
- a regenerative power regulating device (10) which determines regulation of the regenerative power, based on the voltage of the filter capacitor (4) during regeneration, and which outputs a regenerative power pattern signal to the power converter circuit control device (9),
**characterized in that**
the regenerative power regulating device (10) determines regulation of the regenerative power also based on a difference between the trolley wire voltage detected by the trolley voltage detecting means (8) and a rated voltage of the DC trolley wire.

2. The controller as set forth in claim 1,
wherein said trolley voltage detecting means is constituted by the filter capacitor voltage detector (8) which detects the voltage of the filter capacitor (4) when the control rectifying devices (5U, 5V, 5W, 5X, 5Y, 5Z) of the power converter circuit (5) are not operated.

3. The controller according to claim 2,
wherein the filter capacitor voltage detector (8) serving as the trolley voltage detecting means detects the voltage of the filter capacitor (4) between the time that the command is input from the operation table and the time that the control rectifying devices (5U, 5V, 5W, 5X, 5Y, 5Z) of the power converter circuit (5) are operated.

4. The controller according to any of claims 1 to 3,
wherein the regulation of the regenerative power is performed by increasing or decreasing the threshold value of the voltage of the filter capacitor (4).

5. The controller according to any of claims 1 to 3,
wherein the regulation of the regenerative power is performed by regulating a rate of change of regenerative braking activation.

## Patentansprüche

1. Steuereinheit für ein Elektrofahrzeug, die folgendes aufweist:
- einen Filterkondensator (4), der mit einer Gleichstromfahrleitung verbunden ist;
- eine Energiewandlerschaltung (5), die über den Filterkondensator (4) mit der Gleichstromfahrleitung verbunden ist und aus Steuerungsgleichrichtereinrichtungen besteht, die einem Hauptmotor (7) Energie zuführen und andererseits elektrische Energie regenerieren, die aus kinetischer Energie in der Gleichstromfahrleitung umgewandelt wird, wenn der Bremsvorgang des Hauptmotors (7) aktiviert wird;
- einen Filterkondensatorspannungsdetektor (8) zum Detektieren einer Spannung des Filterkondensators (4);
- eine Energlewandlerschaitungs-Steuereinrichtung (9), die die Zugkraft oder Bremskraft steuert, die von dem Hauptmotor (7) in Abhängigkeit von einem Befehl von einem Bedienpult oder von einem Eingangssignal von dem Filterkondensatorspannungsdetektor (8) erzeugt wird, und die ferner während der Regenerierung die regenerative Bremsenergie steuert, so daß die Energie verringert wird, wenn die Spannung des Filterkondensators (4) höher als ein Schwellenwert ist;
- eine Fahrleitungsspannung-Detektiereinrichtung zum Detektieren einer Spannung der Fahrleitung; und
- eine Regenerierungs-Steuereinrichtung (10), die die Regulierung der regenerativen Energie auf der Basis der Spannung des Filterkondensators (4) während der Regenerierung bestimmt und an die Energiewandierschaitungs-Steuereinrichtung (9) ein Regenerierungsmustersignal abgibt,
- **dadurch gekennzeichnet,**
- **daß** die Regenerierungs-Steuereinrichtung (10) die Regulierung der regenerativen Energie auch auf der Basis einer Differenz zwischen der von der Fahrleitungsspannung-Detektiereinrichtung (8) detektierten Fahrleitungsspannung und einer Nennspannung der Gleichstromfahrleitung bestimmt.

2. Steuereinheit nach Anspruch 1,
wobei die Fahrleitungsspannung-Detektiereinrichtung aus dem Filterkondensatorspannungsdetektor (8) besteht, der die Spannung des Filterkondensators (4) detektiert, wenn die Steuerungsgleichrichtereinrichtungen (5U, 5V, 5W, 5X, 5Y, 5Z) der Energiewandlerschaltung (5) nicht aktiviert sind.

3. Steuereinheit nach Anspruch 2,
wobei der als Fahrleitungsspannung-Detektiereinrichtung dienende Filterkondensatorspannungsdetektor (8) die Spannung des Filterkondensators (4) zwischen dem Zeitpunkt, zu dem der Befehl von dem Bedienpult gegeben wird, und dem Zeitpunkt detektiert, zu dem die Steuerungsgleichrichtereinrichtungen (5U, 5V, 5W, 5X, 5Y, 5Z) der Energiewandlerschaltung (5) aktiviert werden.

4. Steuereinheit nach einem der Ansprüche 1 bis 3,
wobei die Regulierung der regenerativen Energie durch Erhöhen oder Senken des Schwellenwerts der Spannung des Filterkondensators (4) durchgeführt wird.

5. Steuereinheit nach einem der Ansprüche 1 bis 3,
wobei die Regulierung der regenerativen Energie durch Regulierung einer Änderungsrate der Aktivierung der regenerativen Bremsung durchgeführt wird.

## Revendications

1. Appareil de commande pour un véhicule électrique comprenant :
- un condensateur de filtrage (4) connecté à un fil de trolley de courant continu ;
- un circuit convertisseur de courant (5) connecté par le condensateur de filtrage (4) au fil de trolley de courant continu et constitué par des dispositifs redresseurs de commande qui fournissent la puissance à un moteur principal (7) et, d'autre part, qui régénèrent l'énergie électrique convertie de l'énergie cinétique dans le fil de trolley de courant continu lorsque le freinage du moteur principal (7) est actionné ;
- un détecteur de tension de condensateur de filtrage (8) pour détecter une tension du condensateur de filtrage (4) ;
- un dispositif de commande de circuit convertisseur de courant (9) qui commande une force de traction ou une force de freinage produite par le moteur principal (7) en réponse à une commande d'un tableau de commande ou d'une entrée du détecteur de tension de condensateur de filtrage (8) et qui, également pendant la régénération, commande une puissance de freinage régénérative de façon que la puissance soit réduite si la tension du condensateur de filtrage (4) est supérieure à une valeur de seuil ;
- un moyen de détection de tension de trolley pour détecter une tension du fil de trolley ; et
- un dispositif régulateur de puissance régénérative (10) qui détermine la régulation de la puissance régénérative sur la base de la tension du condensateur de filtrage (4) pendant la régénération, et qui émet un signal de motif de puissance régénérative au dispositif de commande de circuit convertisseur de courant (9),
**caractérisé en ce que**
le dispositif de régulation de puissance régénérative (10) détermine la régulation de la puissance régénérative également sur la base d'une différence entre la tension du fil de trolley détectée par le moyen de détection de tension de trolley (8) et une tension nominale du fil de trolley de courant continu.

2. Appareil de commande selon la revendication 1, où ledit moyen de détection de tension de trolley est constitué par le détecteur de tension de condensateur de filtrage (8) qui détecte la tension du condensateur de filtrage (4) lorsque les dispositifs de redressement de commande (5U, 5V, 5W, 5X, 5Y, 5Z) du circuit convertisseur de courant (5) ne sont pas actionnés.

3. Appareil de commande selon la revendication 2, où le détecteur de tension de condensateur de filtrage (8) servant de moyen de détection de tension de trolley détecte la tension du condensateur de filtrage (4) entre l'instant où la commandé est entrée depuis le tableau de commande et l'instant où les dispositifs redresseurs de commande (5U, 5V, 5W, 5X, 5Y, 5Z) du circuit convertisseur de courant (5) sont actionnés.

4. Appareil de commande selon l'une des revendications 1 à 3, où la régulation de la puissance régénérative est exécutée en augmentant ou en diminuant la valeur de seuil de la tension du condensateur de filtrage (4).

5. Appareil de commande selon l'une des revendications 1 à 3, où la régulation de la puissance régénérative est exécutée en réglant une vitesse de changement de l'activation de freinage régénérative.
